(19) Europäisches Patentamt European Patent Office Office européen des brevets

(11) **EP 2 883 315 B1**

(12) **EUROPEAN PATENT SPECIFICATION**

(45) Date of publication and mention of the grant of the patent:
**16.01.2019 Bulletin 2019/03**

(21) Application number: **13753678.5**

(22) Date of filing: **08.08.2013**

(51) Int Cl.:
*H04W 52/38* (2009.01)     *H04B 17/345* (2015.01)
*H04W 52/22* (2009.01)     *H04W 52/24* (2009.01)

(86) International application number:
**PCT/GB2013/052122**

(87) International publication number:
**WO 2014/023968 (13.02.2014 Gazette 2014/07)**

(54) **DETECTING INTERFERENCE IN A COMMUNICATION CHANNEL REUSE ENVIRONMENT**

INTERFERENZDETEKTION BEI KOMMUNIKATIONSKANALWIEDERVERWENDUNG

DÉTECTION DE BROUILLAGE DANS UN ENVIRONNEMENT DE RÉUTILISATION DE CANAL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2012 GB 201214203**

(43) Date of publication of application:
**17.06.2015 Bulletin 2015/25**

(73) Proprietor: **Cambridge Broadband Networks Limited**
**Cambridge CB4 0WZ (GB)**

(72) Inventor: **NAYLON, John**
**Bassingbourn**
**Royston SG8 5PB (GB)**

(74) Representative: **Appleyard Lees IP LLP**
**15 Clare Road**
**Halifax HX1 2HY (GB)**

(56) References cited:
**EP-A1- 2 779 493     US-A1- 2005 239 412**

• **ERICSSON: "Feature Clean Up: Removal of "SSDT"", 3GPP DRAFT; R1-050446 CR25214-REL-6_SSDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20050502, 2 May 2005 (2005-05-02), XP050100139, [retrieved on 2005-05-02]**
• **ERICSSON ET AL: "Configuration of CSI Processes for Periodic and Aperiodic Reporting", 3GPP DRAFT; R1-123830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661683, Retrieved from the Internet: URL:http://www.3gpp.org/ftp/tsg_ran/WG1_RL 1/TSGR1_70/Docs/ [retrieved on 2012-08-05]**

**Description**

This invention relates to a system and method for detecting interference between channels in a wireless communications network, particularly, but not exclusively, in a wireless communications network whereby the channels are reused.

Generally, wireless networks refer to networks having at least two nodes in wireless communication with one another, such as wireless computer networks and mobile telephony networks. Such nodes are generally located a fixed or variable distance from each other, whereby the nodes communicate with each other in order to transmit information-bearing signals from node to node.

The nodes may be arranged in specific configurations e.g. point-to-point, whereby communication is typically bi-directional between two nodes; point-to-multi point, whereby communication is typically between a base node and at least two receiver nodes; mesh, or ad-hoc networks, whereby communication may be bi-directional between arbitrary nodes; and/or a mobile phone network, whereby a base station communicates with at least one mobile handset.

Examples of such networks include wireless local area networks (WLAN), wireless metropolitan area networks (WMAN), wireless wide area networks (WWAN), wireless mobile phone networks (e.g. 3G, 4G, 3G/4G LTE) and wireless mesh network (WMN), satellite networks.

The transmission of information between nodes may be controlled using various techniques. For example, the information may be transmitted in channels using frequency separation i.e. frequency divisional duplex (FDD), or time separation, i.e. time divisional duplex (TDD). As such, the channels may comprise alternate frequencies, orthogonal code sequences, or orthogonal sets of sub-carriers etc.

For networks employing radio frequency (RF) electromagnetic waves, a transmitting node will have a limited coverage area, defined by a boundary, within which a receiving node tuned to detect signals within a specific channel will decode the transmission. Beyond the coverage area, the transmitted signal degrades to a level which cannot be detected by a receiving node. In spatially adjacent groups of communicating nodes, different channels are used to distinguish communications. Transmitting nodes can be co-located or adjacent to provide multiple different channels in order to reduce a number of receiving nodes sharing each channel and so improve per-node throughput.

A receiving node within the coverage area of multiple transmitting nodes transmitting on a common channel will experience interference. For example, transmissions from a first node using the common channel will appear as additive noise to receiving nodes attempting to receive the transmission from a second node using the common channel, and vice versa. Such interference results in degradation of the received signal due to increased noise, and thus having a consequent effect on the efficiency of the network. Therefore, in order to reuse channels, network configurations must be designed in such a manner that the receiving nodes are outside the coverage areas of any potential interfering transmitter nodes. However, as will be appreciated, the number of suitable channels that can be used in a network is exhaustible, due to the number of suitable frequencies available for use for transmitting communication signals or code sequences, timeslots etc., as appropriate to the multiplexing technique as will be appreciated by a person skilled in the art.

Therefore, in order to improve the efficiency of the available channel spectrum, existing networks are designed to provide for a high level of channel reuse with a low level of interference.

However, the accurate design of such networks is inherently complicated because various factors cause the boundaries of the coverage area to change in a non-uniform manner over time. For example in a mobile phone network, the boundaries of the coverage area may be constantly affected by various external factors which distort the transmitted signal such as the atmosphere, terrain, buildings, weather.

Therefore, it will be seen that it is possible to reuse a channel for a second transmitting node provided that the distance between transmitting nodes using a common channel is sufficient for atmospheric and/or other attenuations (such as selective antenna gain) to reduce a power of a first transmitting node's radiations to a level which does not interfere with a second transmitting node's radiations.

Furthermore, the edge of a coverage area may not be well defined because the signal strength gradually reduces towards the boundary i.e. there is no defined cut off. As such, a first receiving node having a certain level of sensitivity may experience interference whereas a second receiving node may not.

Various design tools exist which simulate optimal network design. However, such tools require vast amounts of regularly updated data relating to external factors which can be time consuming, complicated and expensive to obtain. There is a consequent tradeoff between cost, time and accuracy and the actual data used in such tools is derived from an approximation of real world effects, which can result in an inefficient network design resulting in interference between nodes in real-world deployment.

Examples of prior systems can be found at US Patent Publication No. 2005/23412 (Kelz, Thomas), Ericssons: Feature Clean Up: Removal of "SSDT", 3GPP Draft: R1-050446 CR25214-REL-6 SSDT 3rd Generation Partnership Project (3GPP), Mobile Competence Centre, 650 Route Des Lucioles: F-06921 Sophia- Antipolis CEDEX France; Vol Ran WG1, no. Athens, Greece 20050502 2 May 2015 and Ericsson et al "Configuration of CSI Processes for Periodic and Aperiodic Reporting" 3GPP Draft R1-123830 3rd Generation Partnership Project (3GPP) Mobile Competence Centre 650 Route Des Lucioles F-06921 Sophia-Antipolis CEDEX France Vol RAN WG1 No. Quingdoa China 20120813-20120817 5 August 2012 (2012-08-05) XP050661683 where references signals are used.

Accordingly, in a first aspect, the invention provides a method of detecting co-channel interference in a wireless communications network as claimed in claim 1.

Other features of the method are defined in the dependent claims to claim 1.

Accordingly, in a second aspect, the invention provides an apparatus as shown in claim 12 below.

Preferably the apparatus further comprising: means for determining the relation between the power level sequences and the quality data sequences by computing a discrete cross-correlation between the power level sequences and the quality data sequences.

Preferred embodiments of the present invention will now be described, by way of example only, with reference to the following drawings in which:

Figure 1 is a schematic diagram of a computer system suitable for use in embodiments of the present invention;

Figure 2 is a schematic illustration of an arrangement for detecting co-channel interference in a wireless communication network in accordance with a preferred embodiment of the present invention;

Figure 3 is a flowchart illustrating a method for detecting co-channel interference in the arrangement of Figure 2 in accordance with a preferred embodiment of the present invention;

Figure 4 is a schematic diagram of a wireless communications network;

Figure 5 provides graphs which illustrate measurements obtained during the operation of the network of Figure 4; and

Figure 6 is a flow chart illustrating a method for detecting co-channel interference in the network of Figure 4.

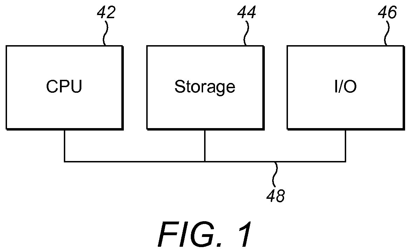

Figure 1 is a block diagram of a computer system suitable for the operation of embodiments of the present invention. A central processor unit (CPU) 42 is communicatively connected to a storage 44 and an input/output (I/O) interface 46 via a data bus 48. The storage 44 can be any read/write storage device such as a random access memory (RAM) or a non-volatile storage device. An example of a non-volatile storage device includes a disk or tape storage device. The I/O interface 46 is an interface to devices for the input or output of data, or for both input and output of data. Examples of I/O devices connectable to I/O interface 46 include a keyboard, a mouse, a display (such as a monitor) and a network connection.

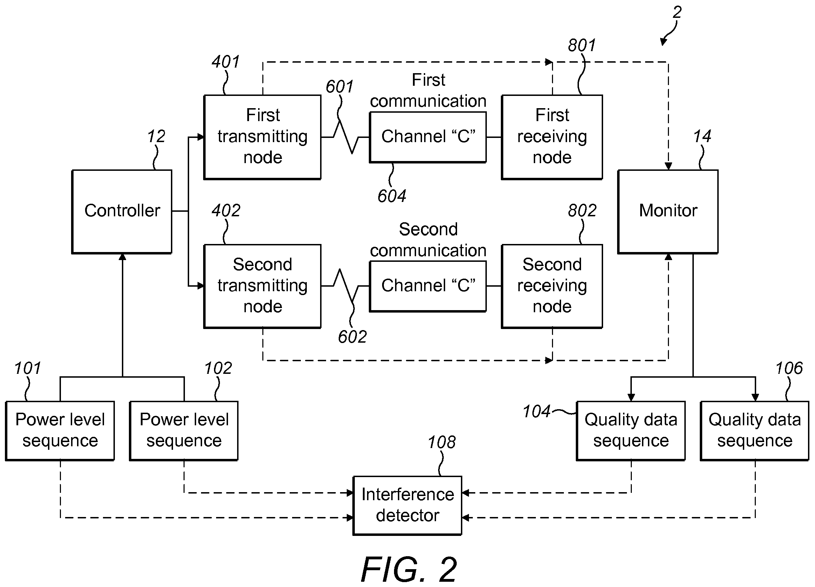

Figure 2 is a schematic illustration of an arrangement for detecting co-channel interference in a wireless communication network 2 in accordance with a preferred embodiment of the present invention. The network 2 includes a first wireless communication 601 between a first transmitting node 401 and a first receiving node 801. Further, the network includes a second wireless communication 602 between a second transmitting node 402 and a second receiving node 802. Transmitting nodes 401, 402 are network elements adapted to transmit network signals in the wireless communications network 2 and include, inter alia: base stations in a mobile phone network; "node Bs" in a 3G telephone network; and hubs or hub sites in a point-to-multipoint or point-to-point backhaul network. Other suitable network elements for transmitting network signals in a wireless communications network will be apparent to those skilled in the art. Transmitting nodes 401, 402 transmit radiated wireless network signals at a radiated power level.

Receiving nodes 801, 802 are mobile or fixed wireless network receiving elements suitable for receiving wireless network signals transmitted by an associated transmitting node 401, 402. For example, receiving nodes 801, 802 can include, inter alia: mobile telephone handsets; 3G communications clients such as mobile personal computing or tablet devices; and remote terminals. Other suitable network elements for receiving network signals in a wireless network will be apparent to those skilled in the art.

First and second communications 601, 602 use a communications channel "C" 604. The communications channel "C" 604 is a mechanism for communicating an information signal between the transmitting nodes 401, 402 and the receiving nodes 801, 802. For example, the communications channel "C" 604 is a connection over a multiplexed medium such as a radio channel operating at a particular frequency by frequency division duplexing or multiplexing. Alternatively, the channel can employ time division duplexing or multiplexing or any other suitable channel mechanism including the use of orthogonal code sequences or orthogonal sets of sub-carriers.

Thus, in use, first receiving node 801 is associated with first transmitting node 401 such that first receiving node 801 receives data transmitted by first transmitting node 401 as the first communication 601. Similarly, second receiving node 802 is associated with second transmitting node 402 such that second receiving node 802 receives data transmitted by second transmitting node 402 as the second communication 602. Notwithstanding the association between first receiving node 801 and respective first transmitting node 401, the first receiving node 801 may additionally receive signals as interference or "noise" from other nodes transmitting on the same channel. For example, first receiving node 801 may receive signals from second transmitting node 402 which is also transmitting on channel "C" 604. The same is true for second receiving node 802 which, notwithstanding the association between second receiving node 802 and second transmitting node 402, may additionally receive signals as interference from the first transmitting node 401 which is also transmitting on channel "C" 604. Such interference is co-channel interference. Factors affecting a level of interference experienced by receiving nodes 801, 802 include: the relative proximity of the transmitting nodes 401, 402 and the receiving nodes 801, 802; the radiated power from the transmitting nodes 401, 402; and external factors such as the terrain, buildings and weather conditions which affect the attenuation of signals from the transmitting nodes 401, 402.

The arrangement of Figure 2 includes elements for detecting co-channel interference including a controller 12 and a monitor 14. Controller 12 is, for example, a network management station implemented as a hardware and/or software component, and responsible for monitoring the performance and correct operation of the network. Controller 12 is operable to receive a power level sequence 101, 102 for each of the transmitting nodes 401, 402. Each of the power level sequences 101, 102 is associated with one of the transmitting nodes 401, 402 and includes a sequence of indicators of a radiated power level for the respective transmitting node 401, 402. For example, power level sequence 101 is associated with the first transmitting node 401 and power level sequence 102 is associated with the second transmitting node 402. In a preferred embodiment, power level sequences 101, 102 are random sequences of binary values, with a binary value of "1" (i.e. HIGH or ON) indicating a first power level and a binary value of "0" (i.e. LOW or OFF) indicating a second power level.

Controller element 12, communicates with each of the transmitting nodes 401, 402. The functionality of the Controller 12 comprises: adjusting the radiated power from the central stations 4. Therefore, by increasing or decreasing the radiated power of the central stations 4, it will be seen that the controller 12 has the ability to adjust the coverage area of each individual transmitting node 401, 402. It will also be seen that the controller 12 could be used to communicate with each of the remote terminals in order to control the functionality thereof.

The controller 12 is adapted to traverse the power level sequences 101, 102 at a predetermined rate such that an indicator from each of the power level sequences 101, 102 is examined sequentially after a predetermined time interval T. Controller 12 is further adapted to adjust a radiated power level of the transmitting nodes 401 depending on the indicator values from the respective power level sequences 101, 102. Preferably, where the power level sequences 101, 102 are bit sequences, a value of a bit in a power level sequence 101, 102 of "1" indicates that a radiated power level of a respective transmitting node 401, 402 is to be set to a nominal value of power level. In contrast, a value of a bit in a power level sequence 101, 102 of "0" indicates that a radiated power level of a respective transmitting node 401, 402 is to be adjusted to a value of power level that is offset from the nominal value of power level. In an aspect, not falling within the scope of the present application, the adjusted power level is the nominal value of power level minus a delta value, $\delta$.

In use, the controller 12 traverses the power level sequences 101, 102 by initially examining the first indicator of power level sequence 101 and setting the radiated power level of the first transmitting node 401 to a value depending on the indicator. The controller 12 also examines the first indicator of the power level sequence 102 and adjusts the radiated power level of the second transmitting node 402 accordingly. The controller 12 advances in sequence to the next indicator in the power level sequences 101, 102. When the controller 12 has traversed all indicators in the power level sequences 101, 102, the controller adjusts the radiated power level of each of the transmitting nodes 401, 402 to the nominal value of power level.

Thus, the controller effects a variation in the radiated power levels of the transmitting nodes between nominal values of power level and adjusted values of power level where the power level is adjusted by the quantum of power adjustment $\delta$. The value of $\delta$ is selected for each of the transmitting nodes 401, 402 such that adjusting the radiated power level of a transmitting node has a negligible effect on a received signal-to-noise ratio at an associated receiving node.

Thus, $\delta$ for the first transmitting node 401 is chosen such that radiated signals from the first transmitting node 401 are received by associated first receiving node 801 with negligible difference in the signal-to-noise ratio at the first receiving node 801 for both the nominal and adjusted values of power level. In an aspect, not falling within the scope of the present application, the value of $\delta$ for a transmitting node is chosen based on a received power level at an associated receiving node.

For example, the value of $\delta$ can be chosen such that it is half of the average random variation of the received power level at the receiving node observed over a defined time period, such as one hour. For instance, if over a one hour period the received signal level at first receiving node 801 from associated first transmitting node 401 was observed to vary between a maximum of -54.4dBm and -56.2dBm then a reasonable value for $\delta$ can be selected to be:

$$\frac{(-54.4) - (-56.2)}{2} = 0.9\text{dBm}$$

Further, the time interval T is selected such that the time taken to adjust the radiated power of a transmitting node is a small fraction of T, preferably less than 5% of T and most preferably less than 1% of T. This is to ensure that the setting of a power level of a transmitting node is effected for substantially all of the time period T following such setting.

Monitor 14 is a hardware or software component operable to periodically monitor channel quality data for each of the first and second receiving nodes 801, 802 and to generate a quality data sequence 104, 106 for each of the receiving nodes 801, 802. The monitor 14 provides periodic samples of approximate or estimated quantitative channel quality data in real-time. For example, such channel quality data can include: an approximate or estimated received signal-to-noise ratio; an uncorrected bit error rate; or any other suitable quantitative channel quality indicator (CQI) metric as will be apparent to those skilled in the art. In the preferred embodiment, values of a quantitative channel quality metric increase numerically as channel quality improves. As will be apparent to those skilled in the art, other channel quality metrics may deviate from this approach and a transformation function may be required to translate such other measures to a model where improved channel quality is reflected by numerically higher quality metrics.

The monitor 14 is operable to undertake periodic channel quality monitoring at a rate that is at least the predetermined rate at which the controller 12 traverses the power level sequences 101, 102. Thus, the monitor 14 samples channel quality data for each of the receiving nodes 801, 802 at least once in every time period T. In a preferred embodiment, the monitor 14 samples the channel quality data at least twice in every time period T such that the monitor 14 samples the channel quality data twice as often as the radiated power is adjusted by the controller 12, as detailed below in relation to Fig 2.

The monitor 14 generates a quality data sequence 104, 106 for each of the receiving nodes 801, 802 as ordered sequenced data items for discrete points in time. For example, quality data sequences are implemented as data structures such as list or array data structures suitable for storing ordered sequences of quantitative data. Alternatively, any such suitable manner for storing quality data sequences 104, 106 can be used as will be apparent to those skilled in the art.

The discrete points in time for which the quality data sequences 104, 106 include quantitative quality data correspond to the time points at which the controller 12 processes each indicator in the power level sequences 101, 102. Thus, entries in the quality data sequences 104, 106 correspond to points in time at which the controller processed entries in the power level sequences 101, 102.

In view of the rate of periodic sampling by the monitor 14 being equal to and potentially higher than the rate of processing the power level sequences 101, 102 by the controller 12, the monitor 14 may not have channel quality data samples for the exact time points at which the controller 12 processes each indicator in the power level sequences 101, 102. In such an arrangement the monitor 14 is further operable to generate channel quality data for such exact time points by interpolation from channel quality samples taken at times adjacent to the exact time point. Such interpolation can be a linear interpolation or other suitable interpolation using a non-linear function as will be apparent to those skilled in the art.

In a preferred embodiment, the monitor 14 samples the channel quality data at least twice as often as the radiated power is adjusted by the controller 12 because sampling theory implies that there are no aliasing effects introduced by the unsynchronised nature of the monitor 14 and the controller 12.

Thus, in embodiments of the present invention the controller 12 causes periodic adjustments to the radiated power levels of each of the transmitting nodes 401, 402 dependent upon the power level sequences 101, 102 in a preferably randomised manner. The monitor 14 generates quality data sequences 104, 106 corresponding to the time points at which the controller 12 adjusts the radiated power levels.

A cross-correlation of the power level sequences 101, 102 and the quality data sequences 104, 106 can provide an indication of interference between transmitting nodes. For example, a reduction in the radiated power of first transmitting node 401 at a given time instant can be expected to result in a reduction in the received channel quality for first receiving node 801 associated with first transmitting node 401. This is because there will be less incident signal power at first receiving node 801 and the same level of interference from second transmitting node 402. Thus, there is a correlation between a reduced power level indicated by the power level sequence 101 for first transmitting node 401, and the quality data sequence 104 associated with the first receiving node 801.

On the other hand, a reduction in the radiated power of second transmitting node 402 at a given time instant can be expected to result in a reduction in the level of interference experienced by first receiving node 801 associated with first transmitting node 401. Accordingly, the channel quality indication in the quality data sequence 104 for the first receiving node 801 will indicate an improved channel quality at a point in time when the power level sequence 102 causes controller 12 to reduce the radiated power level of the second transmitting node 402.

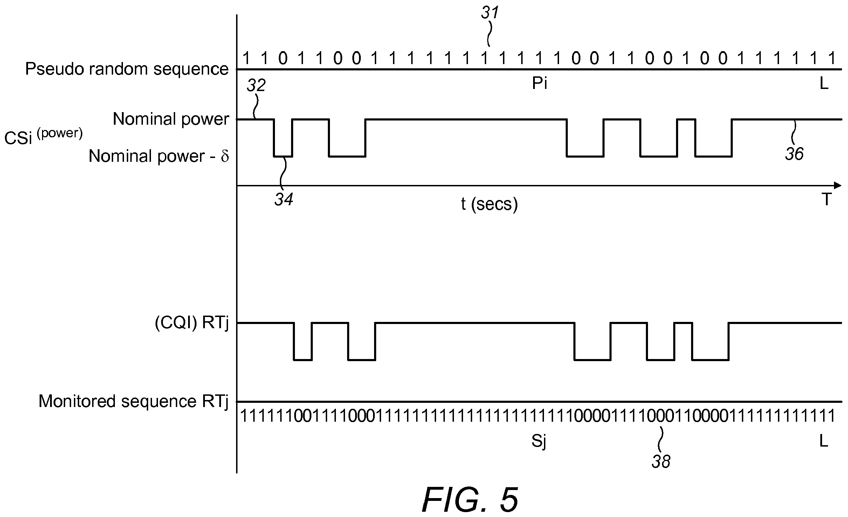

Accordingly, the arrangement of Figure 2 further includes an interference detector 108 as a software or hardware component for determining an indication of interference between the transmitting nodes 401, 402 based on a relation between the power level sequences 101, 102 and the quality data sequences 104, 106. In a preferred embodiment, the interference detector 108 computes a discrete cross-correlation between each of the power level sequences 101, 102 and the quality data sequences 104, 106, for example, as detailed below in relation to Figure 5.

Controller 12, monitor 14 and interference detector 108 can be separate software or hardware components, such as physical or logical computer systems or logic implemented on a generalised computing device as illustrated in Figure 1. Alternatively, controller 12, monitor 14 and interference detector 108 can be implemented in one or more combined software or hardware components, such as different functions of a software component implemented on a generalised computing device.

Whilst Fig 2 describes first and second transmitting nodes 401 and 402 transmitting to first and second receiving nodes 801 and 802 via first and second communication channels 604, it will be appreciated that a single transmitting node using one or more communication channels could also be used in the invention, as could a single receiving node capable of receiving one or more channels. It will also be seen that a single or multiple transmitting node(s) can be used to transmit to a single or multiple receiving node(s) across multiple channels as required, for example in single-input single-output (SISO); single-input multiple-output (SIMO); multiple-input single-output (MISO); and/or multiple-input and multiple-output (MIMO) systems.

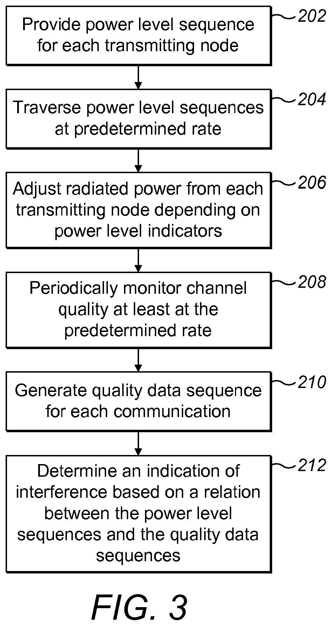

Figure 3 is a flowchart illustrating a method for detecting co-channel interference in the arrangement of Figure 2 in accordance with a preferred embodiment of the present invention. Initially, at step 202, the controller 12 receives a power level sequence 101, 102 for each of the transmitting nodes 401, 402. Each power level sequence 101, 102 is associated with one of the transmitting nodes 401, 402. At step 204, the controller 12 traverses the power level sequences 101, 102 at a predetermined rate such that each indicator in all of the power level sequences 101, 102 is processed after a time interval T. At step 206, the controller 12 adjusts the radiated power from each of the transmitting nodes 401, 402 in accordance with a power level indicator in the power level sequence 101, 102 associated with the transmitting node 401, 402. At step 208, the monitor 14 periodically monitors estimated or approximate channel quality of each of the receiving nodes 801, 802 as a quantitative metric of channel quality. The monitor 14 samples channel quality data at a rate that is at least the predetermined rate. At step 210, the monitor 14 generates a quality data sequence 104, 106 for each of the receiving nodes 801, 802. Each quality data metric stored in each of the quality data sequences 104, 106 corresponds to a point in time at which the controller 12 processed entries in the power level sequences 101, 102. The monitor 14 interpolates a quality data metric where data for an exact point in time is not available from the quality data sampling. Finally, at step 212, the interference detector 108 determines an indication of interference between the transmitting nodes 401, 402 based on a relation between the power level sequences 101, 102 and the quality data sequences 104, 106.

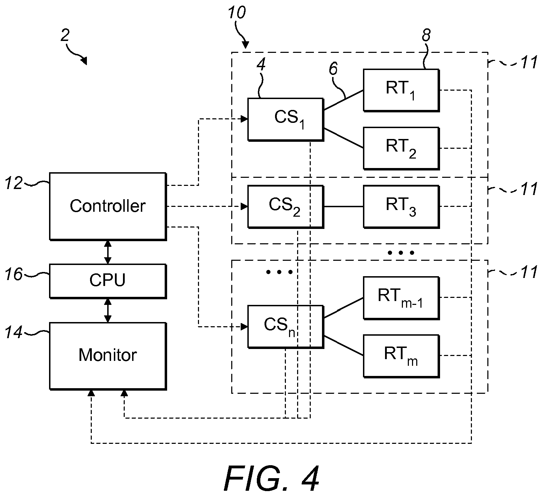

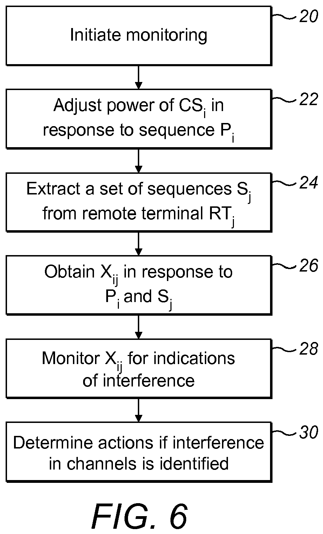

Figure 4 is a schematic diagram of a wireless communications network; Figure 5 provides graphs which illustrate measurements obtained during the operation of the network of Figure 4; whilst Figure 6 is a flow chart illustrating a method for detecting co-channel interference in the network of Figure 4. The network 2 includes central stations 4 ($CS_1$ - $CS_n$), which radiate power to communicate, via channels 6, with remote terminals 8 registered therewith. Each of the remote terminals 8 is registered with a specific one of the central stations 4 and each remote terminal 8 is optimised to detect the radiated power of the central station 4 with which it is registered.

As discussed previously in relation to Figure 2, controller 12 is provided to control the central stations 4, whilst monitor 14 is provided to monitor CQIs in the communications between central stations 4 and remote terminals 8.

A central processing unit (CPU) 16 is communicable with at least the controller 12 and the monitor 14 and provides the functionality required to create power level sequences, receive quality data sequences from the monitor 14, undertake cross correlation computations to detect interference, determine action required if interference is or is not detected etc. It will be seen that the controller 12 and monitor 14 may both be formed as hardware and/or software components being part of, integral to or separate from the CPU 16 as described previously in relation to Figures 1-3.

Coverage areas 10 having boundaries 11 are defined by the extent of the propagation of the radiated power. The remote terminals 8 of Figure 4 are contained within the respective coverage areas 10 of the respective central stations 4 with which they are registered. For example, in Figure 4, remote terminals 8 $RT_1$ and $RT_2$ are registered with central station 4 $CS_1$, $RT_3$ is registered with $CS_2$, whilst $RT_{m-1}$ and $RT_m$ are registered with $CS_n$. Therefore, none of the remote terminals in Figure 4 will experience any interference as they all lie within their respective defined boundaries.

As discussed previously, the time taken to adjust the radiated power of a central station 4 ($CS_1$ - $CS_n$) either up or down by $\delta$ should be a 1% of the time interval T. As an example, 120 seconds is a suitable value for T if a central station 4 can adjust its radiated power by $\pm$ $\delta$ in less than 1.2s.

Furthermore, as discussed above in relation to Figure 2, controller 12 is adapted to adjust the radiated power level of the central stations depending on defined power level sequences. In operation, a series of $n$ random bit sequences (e.g. comprising 1's and '0's) each of length L, $P_1$ to $P_n$, is determined, whereby n is the number of central stations 4 in the network 2. The parameter L may be chosen with reference either to the time interval, T, such that L x T is the total duration of the interference detection process, and it may be desirable to limit this to a specific period such that L is small (e.g. < 50 sequence bits).

It will be seen that the sequences $P_1$ to $P_n$ may be generated using a random number generator, a pseudorandom generator or any other method which provides a sequence of numbers with a reduced probability of cross correlation i.e. generating the same sequence.

The first step 20 of the method as detailed in Figure 6 is to initiate the periodic monitoring by the monitor 14 as discussed above, such that a CQI for $RT_1$ to $RT_m$ are being recorded at least twice every T.

At step two 22 of the process:
At each time t=1...L which are T seconds apart:
For each central station 4 $CS_i$, i=1...n:

i) if a bit (t) of the sequence 31 $P_i$ is a 1, then the controller 12 sets the radiated power of the respective central station 4 $CS_i$ to its nominal value 32 e.g. 30dBm (0dBW).;

ii) if the next bit (t+1) of the sequence $P_i$ is a 0, then the controller 12 adjusts the radiated power of the respective central station 4 $CS_i$ to its nominal value minus $\delta$ 34 e.g. 0.9dBm; then

iii) at the end of each sequence, the controller resets the radiated power of the respective $CS_i$ central station 4 to its nominal value 36.

The third step 24 of the process is to extract from the monitor 14 a set of sequences 38 $S_j$ for each remote terminal 8, i.e. $S_1 ... S_m$ where each set of sequences 38 $S_j$ consists of a sequence of measured values (e.g. binary values) of CQI for a remote terminal 8 $RT_j$ at times t=1...L.

In the fourth step 26, the discrete cross-correlation $X_{ij}$ between each sequence 31 $P_i$, $P_1...P_n$ and each sequence 38 $S_j$, $S_1...S_m$, is obtained, for example, by the CPU 16, and is stored in memory or in a database.

One such discrete cross-correlation may be computed as follows:

i) For each sequence $P_i$, calculate the mean of the sequence across the times t=1...L:

$$\overline{P_i} = \frac{1}{L}\sum_{t=1}^{L} P_{i_t}$$

ii) For each sequence $S_j$, calculate the mean of the sequence across the times t = 1...L:

$$\overline{S_j} = \frac{1}{L}\sum_{t=1}^{L} S_{j_t}$$

iii) Compute $X_{ij}$ as follows:

$$X_{ij} = \frac{\sum_{t=1}^{L}\left(P_{i_t} - \overline{P_i}\right)\left(S_{j_t} - \overline{S_j}\right)}{\sqrt{\sum_{t=1}^{L}\left(P_{i_t} - \overline{P_i}\right)^2 \sum_{t=1}^{L}\left(S_{j_t} - \overline{S_j}\right)^2}}$$

Where a specific remote terminal 8 e.g. ($RT_j$) is in communication with a specific central station 4 ($CS_i$) (that is, remote terminal 8 $RT_j$ is 'registered' with central station 4 $CS_i$, as denoted by the solid lines in Figure 4), if the radiated power of $CS_i$ is reduced at a given instant, it would be expected that the monitored channel quality of $RT_j$, or any other remote terminal 8 registered with $CS_i$ would decrease, since there will be less incident signal power at each receiver with the same level of noise. Therefore the $X_{ij}$ coefficient in this case should be positive: i.e. reduced radiated power results in reduced channel quality and vice versa.

In the case of a remote terminal 8, $RT_k$, registered to $CS_i$, i.e. a different central station 4 than $CS_i$ using the same channel 8, the transmissions of $CS_i$ can, as noted above, appear as unwanted interference to $RT_k$ and perhaps vice versa if $RT_j$ and $RT_k$ are within the coverage areas of $CS_i$ and $CS_l$.

In such a case, if the radiated power of $CS_i$ is reduced, there will be less interference to the desired signal from $CS_l$ at $RT_k$ and the estimated channel quality will increase. Thus the coefficient $X_{ik}$ should be negative: i.e. reduced radiated power from $CS_i$ results in higher CQI and vice versa. Furthermore, if there is complementary interference between $CS_l$ and $RT_j$, $X_{lj}$ will be negative.

It will be seen that at a given instant, if the radiated power of $CS_i$ is reduced whilst the radiated power of $CS_l$ is increased, i.e. the bit sequence $P_i$ comprises the sub-sequence ...10... and $P_l$ comprises the sub-sequence ...01..., if $RT_k$ showed an increase in CQI at this instant, this could be indicative of a contribution as a result of increasing the radiated power of $CS_l$ and the decrease in radiated power from $CS_i$, which as will be appreciated may be ambiguous.

It will also be seen that the use of long sequences and the discrete cross-correlation of the time sequences resolves this ambiguity because over the length of time T, the probability of each transition is equal (in other words, the cross-correlation of the sequences tends towards zero as L grows). Alternatively, for small L, we can filter the set of sequences as detailed below.

It will be appreciated that by using a small L (~ < 50 sequence bits), the length of the interference detection process is reduced compared to using a large L (~ > 1000 sequence bits). However, the probability of a false positive indication of interference occurring is increased. Furthermore, if L is small the set of sequences may be filtered e.g. by the controller 12, or any suitable means, to reject any pairs of sequences which have an excessive cross-correlation factor i.e. whereby a desired percentage of the sequences bits are identical. Excessive cross-correlation could lead to a false positive indication of interference as discussed below. For example if no more than a 0.1% chance of a false positive indication of interference is required, it would be necessary to filter out any pairs with a cross-correlation factor higher than 0.001.

As an example of the filtering functionality of the system, a first sequence S1 is generated which is taken to have an acceptable cross-correlation factor because, for example, no other sequence exists when S1 is generated. A new sequence S2 is then generated and the cross-correlation factor of S1 and S2 is computed. If the cross-correlation factor exceeds a predefined threshold value then S2 is discarded, otherwise S2 is accepted (i.e. filtering functionality). The cross-correlation of any subsequent sequence e.g S3...Sz must be calculated with respect to S1 AND S2 AND S3...Sy and a decision whether or not to discard/accept each individual sequence S2...Sz is undertaken.

A large L may be chosen (L > 1000), which reduces the probability of a false positive indication of interference when it is not occurring, but a large vale for L increases the total duration of the interference detection process. In practice, the skilled person will recognise that L will be determined by network and/or user requirements.

At step 28, the $X_{ij}$ matrix is monitored for negative correlations which indicate interference between $CS_i$ and $RT_j$ either because of use of the same channel or even adjacent channels.

At step 30, when such interference is identified, the CPU 16 can determine the action to be undertaken in response to the interference e.g.

- the radiated power of an interfering central station 4 can be reduced by the controller 12, thereby reducing the interference detected by remote terminals;
- use the controller 12 to decrease the range over which a specific remote terminal 8 detects a transmission;
- identify the exact boundaries 11 of coverage areas 10 and optimise the positioning of remote terminals 8;
- reactively reduce the radiated power from a central station 4 when interference is identified in real time to provide a dynamic system;
- optimise the radiated output from a central station 4 such that the central station 4 does not radiate more power than necessary;
- change the channel of transmission so as to prevent interference on two channels within a defined coverage area;
- reactively increase the transmitted power in response to external factors in real-time so as to prevent downtime when the coverage areas change; and
- increase the efficiency of a network design simulator by feeding back the monitored data to the simulator. Data obtained from the apparatus will provide for more accurate data for deployed networks, which could then be fed back into the simulator for future simulations.

Advantageously, because the adjustment quantum, $\delta$, was deliberately chosen as a value which produces negligible effects on the received signal level at the remote terminals 8 (consistent with random variations due to the variations in the RF path), it is feasible to operate the radiated power modulation continuously without causing capacity degradation. The cross-correlation coefficients may therefore be continually calculated over longer and longer sequences for greater accuracy. When ameliorative action is taken, it is not valid to include parts of a sequence from before and after the action in the cross-correlation calculation, and the sequence length must be reset to zero.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilizes the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention. For example, whilst in the above embodiment the radiated power has been adjusted, the skilled person would recognize that interference could also be detected in reused channels if the receiving nodes transmitted power by using substantially the same method as described above in relation to the transmitting nodes.

Furthermore, whilst one suitable discrete cross-correlation computation method is outlined above, a skilled person would recognise that any suitable discrete cross-correlation computation could be used to compute the discrete cross-correlation $X_{ij}$.

Still furthermore, as will be appreciated by a skilled person, receiving nodes typically use uplink adaptive power control such that they are transmitting a variable power, whilst the received signal strength at the transmitting node is constant, and the skilled person will appreciate that the techniques taught above in relation to the transmitting nodes transmitting power will be substantially applicable to the receiving nodes should such nodes be adapted to transmit power.

**Claims**

1. A method of detecting co-channel transmitting node interference between transmitting node sources in a wireless communications network (2) comprising a first communication (601) between a specific first transmitting node (401) and a first receiving node (801), and a second communication (602) between a respective plurality of other second transmitting nodes (402) and a second receiving nodes (802), wherein the first and second communications use a common channel (604), the method including the steps of:

 Providing (202) a power level sequence as a sequence (104, 106) of indicators of radiated power levels (5) for each of the transmitting nodes;
 traversing (204) the power level sequence for each of the transmitting nodes at a predetermined rate and adjusting (206) a radiated power from each of the transmitting nodes depending on the power level sequence of indicators for the respective transmitting nodes;
 periodically monitoring (208) channel quality data for each of the first and second communications at a monitoring rate to generate (210) a quality data sequence for each of the communications, wherein the rate of periodic monitoring is at least the predetermined rate; and wherein the method further comprises: determining (212) from a relation between the power level sequences and the quality data sequences an indication of interference between the specific first transmitting node and each other second transmitting node then using the relation to adjust for a time period the power level sequences of the transmitting nodes to provide a response at least towards a more acceptable level of interference between the specific first transmitting node and at least some of the second transmitting nodes during the time period.

2. The method according to claim 1, further comprising: determining the relation between the power level sequences and the quality data sequences by computing a discrete cross-correlation between the power level sequences and the quality data sequences.

3. The method according to claim 2, further comprising: adjusting the radiated power of the transmitting nodes depending on the discrete cross-correlation.

4. The method according to any preceding claim, wherein the power level sequence of indicators comprises bits of varying values.

5. The method according to claim 4, further comprising: generating the power level sequence using a random number generator.

6. The method according to claim 4, further comprising: generating the power level sequence using a pseudo-random number generator.

7. The method according to any of claims 4 to 6, further comprising: generating the power level sequence such that the bits are discrete binary values.

8. The method according to claim 7, further comprising: adjusting the radiated power from each of the transmitting nodes depending on the corresponding discrete binary values.

9. The method according to any of claims 1 to 8, further comprising: generating the quality data sequences for each of the communications, wherein the sequences comprise varying values representative of quantitative channel quality indicator measurement for the respective communications.

10. The method according to claim 9, further comprising: generating the quality data sequences for each of the communications, wherein the varying values comprise discrete binary values.

11. The method according to any of claims 3 to 10, further comprising: using the computed discrete cross-correlation between the power level sequences and the quality data sequences as an input in a design simulator.

12. An apparatus (12, 14) for detecting co-channel interference between transmitting node sources in a wireless communications network (2) comprising a first communication (601) between a specific first transmitting node (401) and a first receiving node (801), and a second communication (602) between a second transmitting node (402) and a plurality of other second receiving nodes (802), wherein the first and second communications use a common channel (604), the apparatus comprising:

 means (202) for generating a power level sequence as a sequence of indicators of radiated power levels (5) for each of the transmitting nodes;
 means (204) for traversing the power level sequence (104, 106) for each of the transmitting nodes at a predetermined rate and adjusting (206) a radiated power from each of the transmitting nodes depending on the power level sequence of indicators for the respective transmitting nodes;

means (208) for periodically monitoring channel quality data for each of the first and second communications at a monitoring rate and to generate (210) a quality data sequence for each of the communications; wherein the rate of periodic monitoring is at least the predetermined rate; the apparatus further comprising: means (212) for determining an indication of interference between the specific first transmitting node and each other second transmitting node from a relation between the power level sequences and the quality data sequences and using the relation to adjust for a time period the power level sequences of the transmitting nodes to provide a response at least towards a more acceptable level of interference between the specific first transmitting node and at least some of the second transmitting nodes during the time period.

13. The apparatus according to claim 12, further comprising: means for determining the relation between the power level sequences and the quality data sequences by computing a discrete cross-correlation between the power level sequences and the quality data sequences.

## Patentansprüche

1. Verfahren zum Detektieren einer Gleichkanalübertragungsknotenstörung zwischen Übertragungsknotenquellen in einem Drahtloskommunikationsnetz (2), das eine erste Kommunikation (601) zwischen einem spezifischen ersten Übertragungsknoten (401) und einem ersten Empfangsknoten (801) und eine zweite Kommunikation (602) zwischen jeweiligen mehreren anderen zweiten Übertragungsknoten (402) und zweiten Empfangsknoten (802) umfasst, wobei die erste und zweite Kommunikation einen gemeinsamen Kanal (604) verwenden, wobei das Verfahren die folgenden Schritte beinhaltet:

Bereitstellen (202) einer Leistungspegelsequenz als eine Sequenz (104, 106) von Indikatoren von abgestrahlten Leistungspegeln (5) für jeden der Übertragungsknoten;
Durchlaufen (204) der Leistungspegelsequenz für jeden der Übertragungsknoten mit einer vorbestimmten Rate und Anpassen (206) einer abgestrahlten Leistung von jedem der Übertragungsknoten in Abhängigkeit von der Leistungspegelsequenz von Indikatoren für die jeweiligen Übertragungsknoten;
periodisches Überwachen (208) von Kanalqualitätsdaten für sowohl die erste als auch die zweite Kommunikation mit einer Überwachungsrate, um eine Qualitätsdatensequenz für jede der Kommunikationen zu erzeugen (210),
wobei die Rate des periodischen Überwachens mindestens die vorbestimmte Rate ist; und wobei das Verfahren ferner Folgendes umfasst:
Bestimmen (212), aus einer Beziehung zwischen den Leistungspegelsequenzen und den Qualitätsdatensequenzen, einer Indikation einer Störung zwischen dem spezifischen ersten Übertragungsknoten und jedem anderen zweiten Übertragungsknoten, dann Verwenden der Beziehung, um die Leistungspegelsequenzen der Übertragungsknoten für einen Zeitraum anzupassen, um eine Reaktion zumindest zu einem akzeptableren Störpegel hin zwischen dem spezifischen ersten Übertragungsknoten und zumindest manchen der zweiten Übertragungsknoten während des Zeitraums bereitzustellen.

2. Verfahren nach Anspruch 1, ferner umfassend: Bestimmen der Beziehung zwischen den Leistungspegelsequenzen und den Qualitätsdatensequenzen durch Berechnen einer diskreten Kreuzkorrelation zwischen den Leistungspegelsequenzen und den Qualitätsdatensequenzen.

3. Verfahren nach Anspruch 2, ferner umfassend: Anpassen der abgestrahlten Leistung der Übertragungsknoten in Abhängigkeit von der diskreten Kreuzkorrelation.

4. Verfahren nach einem vorangegangenen Anspruch, wobei die Leistungspegelsequenz von Indikatoren Bits mit variierenden Werten umfasst.

5. Verfahren nach Anspruch 4, ferner umfassend: Erzeugen der Leistungspegelsequenz unter Verwendung eines Zufallszahlgenerators.

6. Verfahren nach Anspruch 4, ferner umfassend: Erzeugen der Leistungspegelsequenz unter Verwendung eines Pseudozufallszahlgenerators.

7. Verfahren nach einem der Ansprüche 4 bis 6, ferner umfassend: Erzeugen der Leistungspegelsequenz, sodass die Bits diskrete Binärwerte sind.

8. Verfahren nach Anspruch 7, ferner umfassend: Anpassen der abgestrahlten Leistung von jedem der Übertragungsknoten in Abhängigkeit von den entsprechenden diskreten Binärwerten.

9. Verfahren nach einem der Ansprüche 1 bis 8, ferner umfassend: Erzeugen der Qualitätsdatensequenzen für jede der Kommunikationen, wobei die Sequenzen variierende Werte umfassen, die eine quantitative Kanalqualitätsindikatormessung für die jeweiligen Kommunikationen repräsentieren.

10. Verfahren nach Anspruch 9, ferner umfassend: Erzeugen der Qualitätsdatensequenzen für jede der Kommunikationen, wobei die variierenden Werte diskrete Binärwerte umfassen.

11. Verfahren nach einem der Ansprüche 3 bis 10, ferner umfassend: Verwenden der berechneten diskreten Kreuzkorrelation zwischen den Leistungspegelsequenzen und den Qualitätsdatensequenzen als einen Eingang in einen Entwurfssimulator.

12. Vorrichtung (12, 14) zum Detektieren einer Gleichkanalstörung zwischen Übertragungsknotenquellen in einem Drahtloskommunikationsnetz (2), das eine erste Kommunikation (601) zwischen einem spezifischen ersten Übertragungsknoten (401) und einem ersten Empfangsknoten (801) und eine zweite Kommunikation (602) zwischen einem zweiten Übertragungsknoten (402) und mehreren anderen zweiten Empfangsknoten (802) umfasst, wobei die erste und zweite Kommunikation einen gemeinsamen Kanal (604) verwenden, wobei die Vorrichtung Folgendes umfasst:

     Mittel (202) zum Erzeugen einer Leistungspegelsequenz als eine Sequenz von Indikatoren von abgestrahlten Leistungspegeln (5) für jeden der Übertragungsknoten;
     Mittel (204) zum Durchlaufen der Leistungspegelsequenz (104, 106) für jeden der Übertragungsknoten mit einer vorbestimmten Rate und Anpassen (206) einer abgestrahlten Leistung von jedem der Übertragungsknoten in Abhängigkeit von der Leistungspegelsequenz von Indikatoren für die jeweiligen Übertragungsknoten;
     Mittel (208) zum periodischen Überwachen von Kanalqualitätsdaten für sowohl die erste als auch die zweite Kommunikation mit einer Überwachungsrate und zum Erzeugen (210) einer Qualitätsdatensequenz für jede der Kommunikationen; wobei die Rate des periodischen Überwachens mindestens die vorbestimmte Rate ist;
     wobei die Vorrichtung ferner Folgendes umfasst:
     Mittel (212) zum Bestimmen einer Indikation einer Störung zwischen dem spezifischen ersten Übertragungsknoten und jedem anderen zweiten Übertragungsknoten aus einer Beziehung zwischen den Leistungspegelsequenzen und den Qualitätsdatensequenzen und zum Verwenden der Beziehung, um die Leistungspegelsequenzen der Übertragungsknoten für einen Zeitraum anzupassen, um eine Reaktion zumindest zu einem akzeptableren Störpegel hin zwischen dem spezifischen ersten Übertragungsknoten und zumindest manchen der zweiten Übertragungsknoten während des Zeitraums bereitzustellen.

13. Vorrichtung nach Anspruch 12, ferner umfassend: Mittel zum Bestimmen der Beziehung zwischen den Leistungspegelsequenzen und den Qualitätsdatensequenzen durch Berechnen einer diskreten Kreuzkorrelation zwischen den Leistungspegelsequenzen und den Qualitätsdatensequenzen.

**Revendications**

1. Procédé de détection de brouillage de noeuds de transmission dans le même canal entre des sources de noeuds de transmission dans un réseau de communications sans fil (2) comprenant une première communication (601) entre un premier noeud de transmission spécifique (401) et un premier noeud de réception (801), et une deuxième communication (602) entre une pluralité respective d'autres deuxièmes noeuds de transmission (402) et un deuxième noeud de réception (802), les première et deuxième communications utilisant un canal commun (604), le procédé comportant les étapes de :

     obtention (202) d'une séquence de niveaux de puissance sous la forme d'une séquence (104, 106) d'indicateurs de niveaux de puissance rayonnée (5) pour chacun des noeuds de transmission ;
     défilement (204) de la séquence de niveaux de puissance pour chacun des noeuds de transmission à un rythme prédéterminé et réglage (206) d'une puissance rayonnée depuis chacun des noeuds de transmission en fonction de la séquence d'indicateurs de niveaux de puissance pour les noeuds de transmission respectifs ;
     surveillance périodique (208) de données de qualité de canal pour chacune des première et deuxième communications à un rythme de surveillance pour générer (210) une séquence de données de qualité pour chacune des communications, le rythme de surveillance périodique étant au moins le rythme prédéterminé ; et le procédé comprenant en outre :
     la détermination (212), à partir d'une relation entre les séquences de niveaux de puissance et les séquences de données de qualité, d'une indication de brouillage entre le premier noeud de transmission spécifique et chaque autre deuxième noeud de transmission puis l'utilisation de la relation pour régler pendant un laps de temps les séquences de niveaux de puissance des noeuds de transmission pour fournir une réponse tendant au moins vers un niveau plus accep-

table de brouillage entre le premier noeud de transmission spécifique et au moins certains des deuxièmes noeuds de transmission pendant le laps de temps.

2. Procédé selon la revendication 1, comprenant en outre : la détermination de la relation entre les séquences de niveaux de puissance et les séquences de données de qualité par calcul d'une corrélation croisée discrète entre les séquences de niveaux de puissance et les séquences de données de qualité.

3. Procédé selon la revendication 2, comprenant en outre : le réglage de la puissance rayonnée des noeuds de transmission en fonction de la corrélation croisée discrète.

4. Procédé selon une quelconque revendication précédente, dans lequel la séquence d'indicateurs de niveaux de puissance comprend des bits de valeurs variables.

5. Procédé selon la revendication 4, comprenant en outre : la génération de la séquence de niveaux de puissance au moyen d'un générateur de nombres aléatoires.

6. Procédé selon la revendication 4, comprenant en outre : la génération de la séquence de niveaux de puissance au moyen d'un générateur de nombres pseudo-aléatoires.

7. Procédé selon l'une quelconque des revendications 4 à 6, comprenant en outre : la génération de la séquence de niveaux de puissance de telle sorte que les bits soient des valeurs binaires discrètes.

8. Procédé selon la revendication 7, comprenant en outre : le réglage de la puissance rayonnée depuis chacun des noeuds de transmission en fonction des valeurs binaires discrètes correspondantes.

9. Procédé selon l'une quelconque des revendications 1 à 8, comprenant en outre : la génération des séquences de données de qualité pour chacune des communications, les séquences comprenant des valeurs variables représentatives d'une mesure d'indicateur de qualité de canal quantitative pour les communications respectives.

10. Procédé selon la revendication 9, comprenant en outre : la génération des séquences de données de qualité pour chacune des communications, les valeurs variables comprenant des valeurs binaires discrètes.

11. Procédé selon l'une quelconque des revendications 3 à 10, comprenant en outre : l'utilisation de la corrélation croisée discrète calculée entre les séquences de niveaux de puissance et les séquences de données de qualité comme une entrée dans un simulateur de conception.

12. Appareil (12, 14) destiné à détecter un brouillage dans le même canal entre des sources de noeuds de transmission dans un réseau de communications sans fil (2) comprenant une première communication (601) entre un premier noeud de transmission spécifique (401) et un premier noeud de réception (801), et une deuxième communication (602) entre un deuxième noeud de transmission (402) et une pluralité d'autres deuxièmes noeuds de réception (802), les première et deuxième communications utilisant un canal commun (604), l'appareil comprenant :

    des moyens (202) pour générer une séquence de niveaux de puissance sous la forme d'une séquence d'indicateurs de niveaux de puissance rayonnée (5) pour chacun des noeuds de transmission ;
    des moyens (204) pour faire défiler la séquence de niveaux de puissance (104, 106) pour chacun des noeuds de transmission à un rythme prédéterminé et régler (206) une puissance rayonnée depuis chacun des noeuds de transmission en fonction de la séquence d'indicateurs de niveaux de puissance pour les noeuds de transmission respectifs ;
    des moyens (208) pour surveiller périodiquement des données de qualité de canal pour chacune des première et deuxième communications à un rythme de surveillance et pour générer (210) une séquence de données de qualité pour chacune des communications ; le rythme de surveillance périodique étant au moins le rythme prédéterminé ; l'appareil comprenant en outre :
    des moyens (212) pour déterminer une indication de brouillage entre le premier noeud de transmission spécifique et chaque autre deuxième noeud de transmission à partir d'une relation entre les séquences de niveaux de puissance et les séquences de données de qualité et utiliser la relation pour régler pendant un laps de temps les séquences de niveaux de puissance des noeuds de transmission pour fournir une réponse tendant au moins vers un niveau plus acceptable de brouillage entre le premier noeud de transmission spécifique et au moins certains des deuxièmes noeuds de transmission pendant le laps de temps.

13. Appareil selon la revendication 12, comprenant en outre : des moyens pour déterminer la relation entre les séquences de niveaux de puissance et les séquences de données de qualité en calculant une corrélation croisée discrète entre les séquences de niveaux de puissance et les séquences de données de qualité.

FIG. 1

FIG. 2

Provide power level sequence
for each transmitting node —202

Traverse power level sequences
at predetermined rate —204

Adjust radiated power from each
transmitting node depending on
power level indicators —206

Periodically monitor channel
quality at least at the
predetermined rate —208

Generate quality data sequence
for each communication —210

Determine an indication of
interference based on a relation
between the power level
sequences and the quality data
sequences —212

*FIG. 3*

FIG. 4

FIG. 5

Initiate monitoring ~20

Adjust power of $CS_i$ in response to sequence $P_i$ ~22

Extract a set of sequences $S_j$ from remote terminal $RT_j$ ~24

Obtain $X_{ij}$ in response to $P_i$ and $S_j$ ~26

Monitor $X_{ij}$ for indications of interference ~28

Determine actions if interference in channels is identified ~30

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200523412 B, Kelz, Thomas

**Non-patent literature cited in the description**

- Feature Clean Up: Removal of "SSDT. **ERICSSONS.** 3GPP Draft: R1-050446 CR25214-REL-6 SSDT 3rd Generation Partnership Project (3GPP). Mobile Competance Centre, 02 May 2015

- Configuration of CSI Processes for Periodic and Aperiodic Reporting. **ERICSSON et al.** 3GPP Draft R1-123830 3rd Generation Partnership Project (3GPP). Mobile Competence Centre, 05 August 2012